# EUROPÄISCHE PATENTSCHRIFT

(11) **EP 2 994 271 B1**
(45) Veröffentlichungstag und Bekanntmachung des Hinweises auf die Patenterteilung: **23.08.2017**
(21) Anmeldenummer: 15726507.5
(22) Anmeldetag: 31.03.2015
(51) Int. Cl.: B25B 23/04, B25C 1/00, F16B 27/00

(54) **MAGAZINBAND UND MAGAZINZUFÜHRUNG FÜR EIN SOLCHES MAGAZINBAND**
MAGAZINE STRIP AND MAGAZINE FEED FOR SUCH A MAGAZINE STRIP
BANDE DE CHARGEUR ET ALIMENTATION PAR CHARGEUR POUR UNE TELLE BANDE DE CHARGEUR

(30) Priorität: 08.04.2014 DE 102014005105
(43) Veröffentlichungstag der Anmeldung: 16.03.2016
(73) Patentinhaber: adunoX GmbH, 36304 Alsfeld/Eifa (DE)
(72) Erfinder: SCHMIDT, Björn, 63679 Schotten (DE)
(74) Vertreter: Hebing, Norbert
(86) Internationale Anmeldenummer: PCT/DE2015/000162
(87) Internationale Veröffentlichungsnummer: WO 2015/154739

(56) Entgegenhaltungen:
- EP-A1- 2 402 118
- EP-A2- 1 785 232
- WO-A1-93/09918
- DE-A1-102011 077 433

## Beschreibung

Die Erfindung bezieht sich auf ein Magazinband mit einer Vorderseite und einer Rückseite, wobei sich an der Vorderseite Halter für längliche Befestigungsmittel befinden, welche so ausgerichtet sind, dass die in den Haltern aufgenommenen Befestigungsmittel parallel zueinander und parallel zur Vorderseite, aber schräg zu der Längsausdehnung des Magazinbandes verlaufen, und wobei sich an der Rückseite Führungsmittel befinden, um das Magazinband in einer Magazinführung zu führen.

Ein derartiges Magazinband ist in der DE 10 2011 077 433 A1 gezeigt. Die Schräganordnung des Magazinbandes hat den Vorteil, dass die Festigungsmittel, in der Regel Schrauben, enger zusammengepackt werden können, da die Köpfe der Schrauben sich in der Draufsicht überlappen. Da die Schrauben schräg zum Band angeordnet sind, muss das Band ebenfalls schräg von oben dem Eintreibmittel zugeführt werden. Dies hat den Nachteil, dass das geleerte Band weiter schräg nach unten läuft und damit gegen die zu bearbeitende Fläche, in der die Schrauben eingedreht werden. Zwar knickt das Magazinband dort ab, trotz allem behindert dies das saubere Ansetzen und Einschrauben der Schrauben.

In der DE 10 2011 077 433 A1 ist eine Magazinbandzuführung offenbart, mit dem ein Magazin von schräg oben dem Werkzeug zugeführt wird. Nach der Entnahme der Schrauben läuft das Magazin in die ursprüngliche Richtung weiter.

Die EP 2 402 118 A1 zeigt eine Magazinbandführung für ein Magazinband, in dem die Köpfe der Schrauben gehalten sind. Das Magazinband wird in einem Bogen um die Schrauberspitze geführt.

Die EP 1 785 232 A2 zeigt eine Vorschubeinrichtung für ein Magazinband, wie es in der EP 2 402 118 A1 beschrieben ist.

Die Führung des Magazinbandes gemäß, der WO 93/09918 sieht vor, dass das Magazinband von oben kommend in einem Bogen um die Schrauberspitze geführt wird.

Die Erfindung beruht daher auf der Aufgabe, ein Magazinband und eine zur Aufnehmung eines solchen Magazinbandes, geeignete Magazinzuführung zu schaffen, mit denen verhindert wird, dass das Magazinban gegen die zu bearbeitende Fläche läuft.

Die Aufgabe wird durch ein Magazinband nach Anspruch 1 bzw. durch ein Eintreibegerät mit einer Magazinführung nach Anspruch 8g ist.

Grundsätzlich ist dazu vorgesehen, dass der geleerte Magazinabschnitt gekrümmt und aus der Zuführungsebene seitlich herausgelenkt wird. Um dies zu ermöglichen, ist das Magazinband mit einer Vielzahl von Scharnieren ausgestattet, deren Scharnierachsen mit der Ausrichtung der Halter einen von Null verschiedenen spitzen Winkel einschließen.

Dies hat zur Folge, dass eine Krümmung um die Achse erfolgt, wenn das Magazinband in eine Umlenkung einläuft, die parallel zu den Scharnierachsen verläuft. Da diese einen von Null verschiedenen spitzen Winkel einschließen, wird das Magazinband nicht nur seitlich gekrümmt, sondern gleichzeitig angehoben.

Der Effekt ist besonders groß, wenn die Scharnierachsen senkrecht zur Längsausdehnung des Magazinbandes verlaufen.

Bei einem Verlauf der Scharnierachsen senkrecht zur Längsausdehnung des Magazinbandes ergibt sich bei einer Umlenkung von 90°, dass das auslaufende Magazinband senkrecht zur Eintreibrichtung verläuft und damit parallel zu der bearbeiteten Fläche.

Bei einer Umlenkung um 180° verläuft das Magazinband parallel zur Eingangsrichtung zurück.

Dieser Effekt ist ggf. schwächer ausgeprägt, wenn die Scharnierachsen nicht senkrecht zu der Längsausdehnung des Magazinbandes verlaufen.

Die Magazinbänder sind vorzugsweise aus Kunststoff hergestellt. Um den Scharniereffekt zu erhalten, ist vorgesehen, dass die Scharniere von Bereichen des Kunststoffbandes gebildet sind, die zwischen den Vorsprüngen an der Rückseite des Magazinbandes liegen. Diese versteifen das Kunststoffband abschnittsweise, so dass die Bereiche zwischen den Vorsprüngen relativ leicht gebogen werden können und wie Scharniere wirken.

Um den Effekt zu verstärken und klarer zu definieren, kann vorgesehen werden, dass die Scharniere von Dickeschwächungen im Magazinband gebildet sind. Grundsätzlich können aber auch kleine Schlitze im Scharnierband vorgesehen werden, deren Längsausdehnung die Scharnierachse definiert.

Die vorerwähnten Vorsprünge dienen gleichzeitig als Führungsmittel. Dazu besitzen sie an ihren oberen und unteren Kanten, die parallel zu den Längskanten des Magazinbandes verlaufen, jeweils einen Hinterschnitt, in den Längsstege einer Schiene in der Magazinführung eingreifen.

Die Halter auf der Vorderseite des Magazinbandes können beliebig gestaltet werden. Es hat sich aber gezeigt, dass C-förmige Klammern am besten geeignet sind.

Eine weitere Entwicklung sieht vor, dass jeder Halter aus zwei C-förmigen Klammern gebildet wird, die bezogen auf die Halterausrichtung übereinander angeordnet sind.

Dies hat den Vorteil, dass die eine Klammer z. B. den Schaft einer Schraube und die andere Klammer den etwas dickeren Fräsabschnitt der Schraube umfassen kann, wobei beide Abschnitte der Schraube elastisch von der jeweiligen Klammer gehalten werden. Bei einer einheitlichen Klammer würde diese vom Fräsabschnitt soweit aufgeweitet, dass sie den Schaft der Schraube nicht mehr halten könnte.

Um Toleranzen auszugleichen und damit die jeweilige Schraube zum Eintreibmittel ausrichten zu können, ist vorgesehen, dass jede Klammer über einen Klammersteg mit dem Magazinband verbunden ist, der sich in Richtung der Halterausrichtung erstreckt.

Grundsätzlich kann eine solche doppelte Klammerausführung bei jeder Art von Magazinband eingesetzt werden und zwar auch bei geraden Magazinbändern, die nicht für eine Schrägzuführung und/oder eine Krümmung nach dem Auslaufen aus der Führung vorgesehen sind.

Die Erfindung bezieht sich weiterhin auf eine für ein Eintreibgerät vorgesehene Magazinführung. Um die erwähnte Umlenkung zu erreichen, ist vorgesehen, dass sich am Ausgang des Schaftes eine Umlenkeinheit befindet, die so gestaltet ist, dass der am Ausgang des Schachtes austretende, geleerte Magazinbandabschnitt gekrümmt und dabei aus der Schachtebene seitlich herauslenkt wird, wobei die Krümmungsachse einen spitzen von Null verschiedenen Winkel mit der Eintreibrichtung einschließt.

Die Umlenkeinheit ist vorzugsweise so eingerichtet, dass die Umlenkung mindestens 90° beträgt.

Weiterhin ist sie mit einer Vorschubeinrichtung für das Magazinband ausgestattet, deren Besonderheit darin besteht, dass der Vorschub beim Zurückziehen des Eintreibgerätes erfolgt.

Die Vorschubeinrichtung sieht daher eine Klinke vor, die mit dem Eintreibgerät derart gekoppelt ist, dass beim Eintreiben eines Befestigungsmittels die Klinke entgegen der Vorschubrichtung und relativ zum Magazinband zurückgezogen wird und beim Zurückziehen des Eintreibgeräts unter Mitnahme des Magazinbandes in Vorschubrichtung bewegt wird.

Im Folgenden soll anhand eines Ausführungsbeispieles die Erfindung näher erläutert werden. Dazu zeigen:
- Fig. 1a: eine perspektivische Ansicht auf die Vorder-seite des erfindungsgemäßen Magazinbandes,
- Fig. 1b: eine perspektivische Ansicht auf die Rückseite des erfindungsgemäßen Magazinbandes,
- Fig. 2: eine erste Ausführungsform einer erfindungsgemäßen Magazinführung mit einem aus zwei Profilen zusammengesetzten Schacht zur Führung des Magazinbandes,
- Fig. 3: eine zweite Ausführungsform einer erfindungsgemäßen Magazinführung mit einem lasergeschnittenen Schacht zur Führung des Magazinbandes,
- Fig. 4: eine vergrößerte perspektivische Darstellung des Kopfes der Magazinführung mit einer Vorschubeinrichtung für das Magazinband und
- Fig. 5: eine vergrößerte perspektivische Darstellung des inneren Aufbaus des Kopfes der Magazinführung.

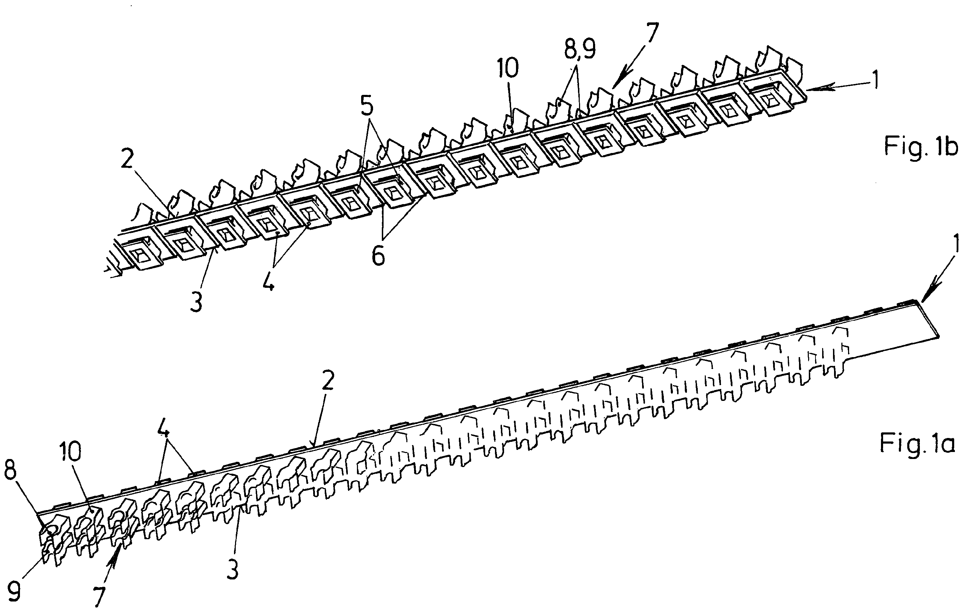

Gemäß der Fig 1 besteht das Magazinband 1 aus einem Kunststoffband mit einer Ober- und einer Unterkante 2, 3, die parallel zueinander verlaufen und die die Längsausdehnung des Magazinbandes 1 bestimmen. Auf der Rückseite befindet sich nebeneinander eine Vielzahl von rechteckigen Vorsprüngen 4, deren der Ober- und der Unterkante 2, 3 zugewandten Seiten des Magazinbandes jeweils einen sich parallel zur Längsrichtung des Magazinbandes 1 erstreckenden Hinterschnitt 5 aufweisen.

Zwischen den Vorsprüngen 4 verlaufen senkrecht zur der Ober- und der Unterkante 2, 3 linienförmig verdünnte Bereiche im Band, die Scharniere 6 darstellen.

Auf der Vorderseite befinden sich Halter 7 für Schrauben, die aus zwei übereinander angeordneten C-förmigen Klammern 8, 9 bestehen, die jeweils über einen Klammersteg 10 an das Magazinband anschließen. Die Klammern sind auf einem Teil des Bandes nur schematisch angedeutet. Jeder Halter 7 befindet sich in einem Bereich, der auf der Rückseite seitlich von zwei Verdünnungslinien, die Scharniere 6 bilden, begrenzt ist.

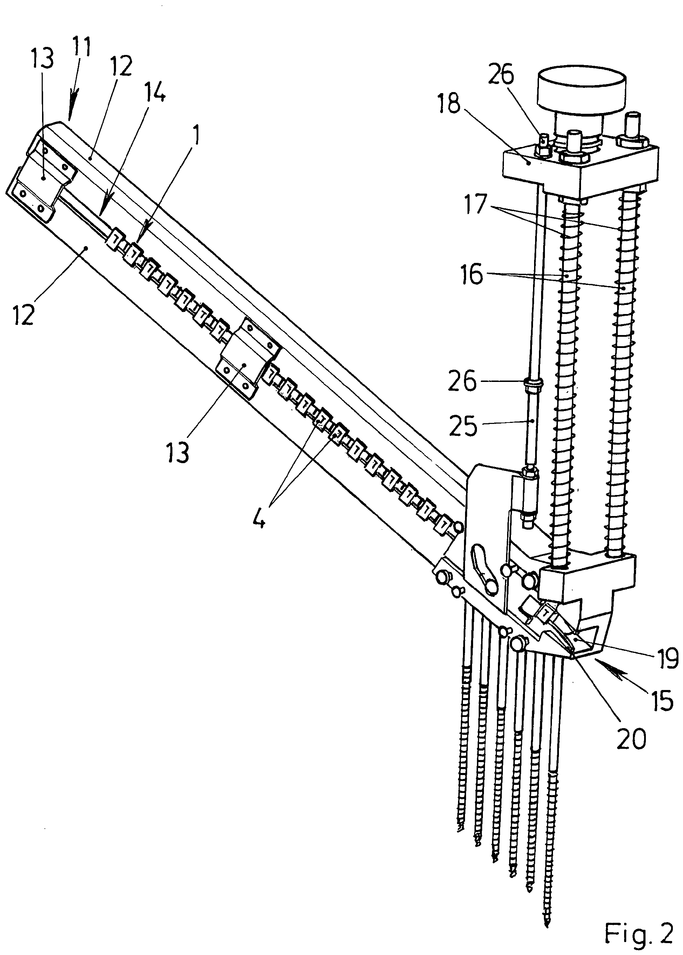

Zur Führung eines solchen Magazinbandes 1 ist eine Magazinführung - wie in Fig. 2 dargestellt - vorgesehen, die aus einem Schacht 11 besteht, der im Schnitt C-förmig oder L-förmig ist und durch zwei Profile 12 gebildet wird, die über Bügel 13 miteinander verbunden sind, so dass ein durchgehender Schlitz 14 entsteht, dessen Kanten Stege bilden, die in die Hinterschnitte 5 des Magazinbandes 1 eingreifen.

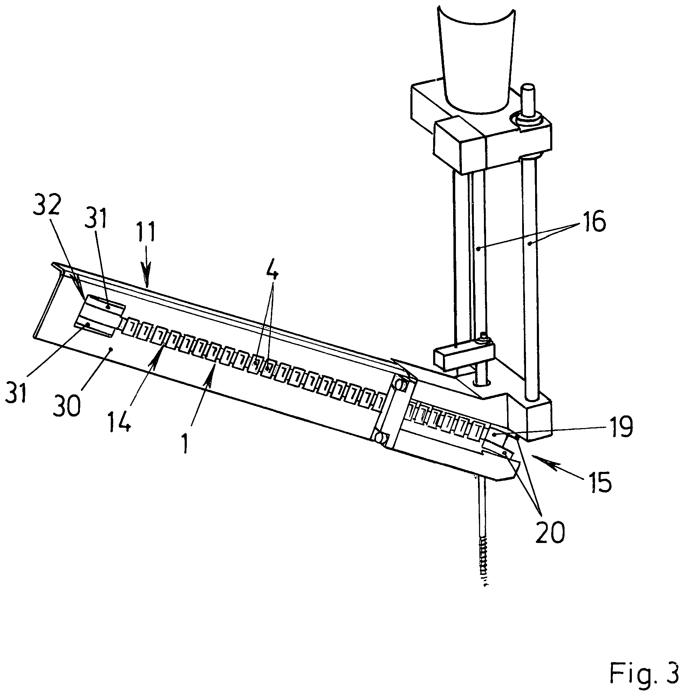

Die Fig. 3 zeigt eine alternative Ausführung der Magazinführung. Anstelle von zwei Winkelprofilen, die über Brücken miteinander verbunden sind, ist eine L-förmige Schiene 30 vorgesehen, in dessen Boden der Schlitz 14, z. B. mittels eines Lasers, eingeschnitten worden ist. Zum Einfädeln eines Gurtbandes sind am Anfang des Schlitzes zwei Einfädellaschen 31 vorgesehen, deren Innenkanten eine Verlängerung der Innenkanten des Schlitzes 14 darstellen und die aus einer Öffnung 32 im Boden der Schiene herausgelogen sind, deren Breite größer ist als die Breite des Schlitzes 14.

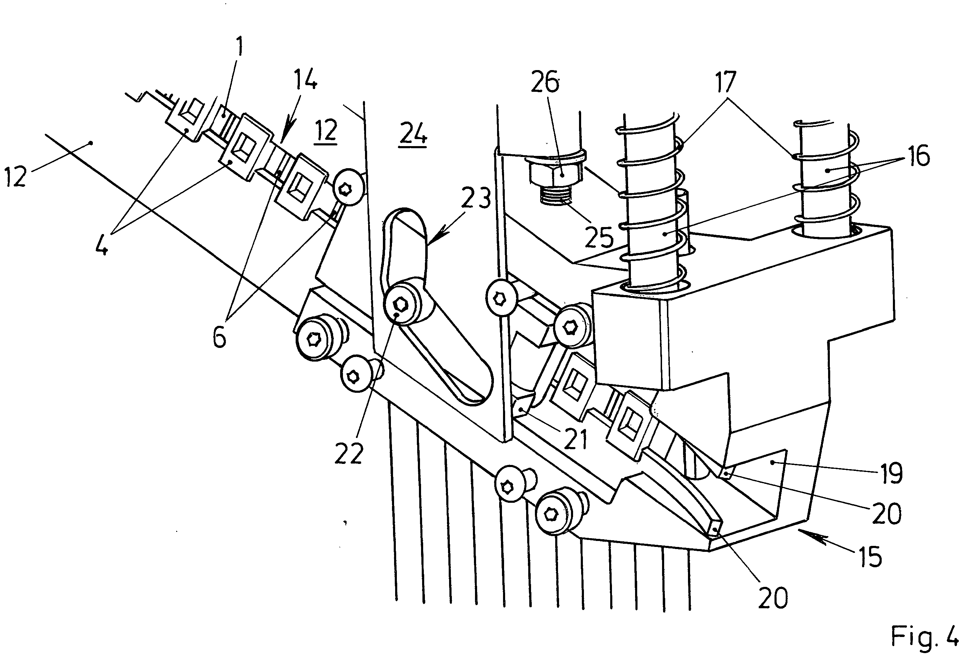

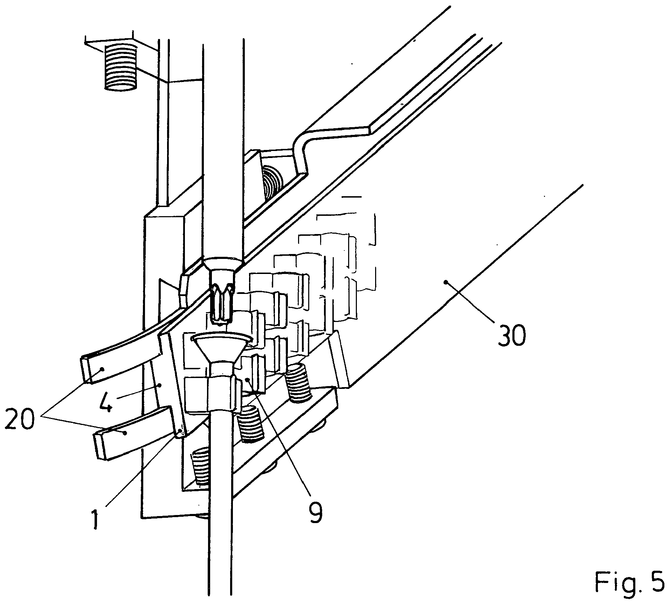

Wie in Fig. 4 und 5 dargestellt, führt beide Ausführungen der Schacht 11 in einen Kopf 15 mit einem Durchgang für ein Schraubwerkzeug. Von der Oberseite des Kopfes 15 stehen zwei Führungsstangen 16 nach oben ab, auf denen sich jeweils eine Schraubenfeder 17 befindet. Von den Führungsstangen 16 wird ein Adapter 18 geführt, der zur Aufnahme eines hier nicht näher dargestellten Eintreibgeräts, z. B. eines Schraubers, dient. Zum Eintreiben einer Schraube wird der Schrauber gegen den Kopf 15 geführt, wobei die Schraubenfedern 17 zusammengedrückt werden, so dass sie den Schrauber nach Beendigung des Eintreibvorganges wieder zurückstellen können.

Der Kopf 15 weist eine Querrinne 19 auf, die den Schacht 11 in den Kopf 15 hinein verlängert, wobei von den Profilen 12, die den Schacht 11 bilden, jeweils eine den Schlitz 14 verlängernde Zunge 20 in die Querrinne 19 führt. Diese Zungen 20 sind zur Seite aus der Querrinne 19 heraus gebogen, so dass der geleerte Magazinbandabschnitt, aus dem die Schrauben herausgedreht worden sind, zur Seite gelenkt wird. Da die Scharniere 6 des Magazinbandes 1 senkrecht zu den Kanten 2, 3 des Magazinbandes 1 verlaufen, wird das Magazinband 1 durch seine Krümmung gleichzeitig angehoben. Bei einer Umlenkung von 90° verläuft das Magazinband 1 jenseits des Kopfes 15 senkrecht zur Eintreibrichtung. Bei einer Umlenkung um 180° läuft das Magazinband 1 parallel zum Schacht 11 wieder zurück und stellt damit keine Behinderung dar.

In der vergrößerten Darstellung, insbesondere der Fig. 5, sind diese beiden Zungen 20 in der Verlängerung des Schachtes 11 noch mal zu erkennen.

In der Fig. 4 ist die Vorschubeinrichtung näher dargestellt. Diese besteht aus einer Klinke 21, die federnd vorgespannt in dem Zwischenraum zwischen zwei Vorsprüngen 4 eingreift. Die Klinke 21 besitzt einen Kulissenstein 22, der in der Kulisse 23 eines Schiebers 24 angeordnet ist.

Der Schieber 24 ist, wie dies in der Fig. 2 zu erkennen ist (in der Fig. 2 wurde auf die Darstellung des Schiebers 24 verzichtet), mit einer Stange 25 verbunden, die durch den Adapter 18 hindurchführt und auf beiden Seiten des Adapters 18 mit von Muttern gebildeten Anschlägen 26 versehen ist, die einen Leerweg definierenden Abstand zueinander aufweisen. Die Kulisse 23 ist so eingerichtet, dass beim Herunterdrücken des Schiebers 24 die Klinke 21 nach hinten, also gegen die Vorschubrichtung, gezogen wird und damit über den hinter ihr liegenden Vorsprung 4a gezogen wird und sich dort an der Rückseite dieses Vorsprungs 4a wieder anlegt (siehe Fig. 3).

Wenn das Eintreibgerät beim Nachlassen der manuellen Betätigungskraft durch die Kraft der Schraubenfedern 17 zurückgefahren wird, nimmt der Adapter nach einem Leerweg den Schieber 24 mit, wodurch die Klinke 21 in Vorschubrichtung geschoben wird und dabei das Magazinband 1 mitnimmt. Die für den Vorschub benötigte Kraft wird somit von den Schraubenfedern 17 bereitgestellt. Gegenüber einer Vorschubeinrichtung, bei der der Vorschub beim anfänglichen Zusammendrücken der Schraubenfedern 17 erfolgt, hat dies den Vorteil, dass der Betätigungsweg des Adapters 18 kürzer sein kann, da sofort mit dem Einschrauben begonnen werden kann und nicht erst eine Schraube unter den Schrauber platziert werden muss.

Diese Ausgestaltung der Vorschubeinrichtung kann grundsätzlich auch dann eingesetzt werden, wenn die Aspekte der Erfindung, die sich auf die Umlenkung des Magazinbandes 1 beziehen, nicht zum Einsatz kommen.

### Bezugszeichenliste

| | | | |
|---|---|---|---|
| 1 | Magazinband | 21 | Klinke |
| 2 | Oberkante | 22 | Kulissenstein |
| 3 | Unterkante | 23 | Kulisse |
| 4 | Vorsprünge | 24 | Schieber |
| 5 | Hinterschnitt | 25 | Stange |
| | | | |
| 6 | Scharnier | 26 | Anschläge |
| 7 | Halter | 30 | Schiene |
| 8 | Klammer | 31 | Einfädellaschen |
| 9 | Klammer | 32 | Öffnung |
| 10 | Klammersteg | | |
| | | | |
| 11 | Schacht | | |
| 12 | Profile | | |
| 13 | Bügel | | |
| 14 | Schlitz | | |
| 15 | Kopf | | |
| | | | |
| 16 | Führungsstangen | | |
| 17 | Schraubenfedern | | |
| 18 | Adapter | | |
| 19 | Querrinne | | |
| 20 | Zungen | | |

## Patentansprüche

1. Magazinband mit einer Vorderseite und einer Rückseite, wobei sich an der Vorderseite Halter (7) für längliche Befestigungsmittel befinden, welche so ausgerichtet sind, dass die in den Haltern (7) aufgenommenen Befestigungsmittel parallel zueinander und parallel zur Vorderseite, aber schräg zu der Längsausdehnung des Magazinbandes (1) verlaufen, und wobei sich an der Rückseite Führungsmittel (4) befinden, um das Magazinband (1) in einer Magazinführung (11) zu führen, **dadurch gekennzeichnet, dass** das Magazinband (1) mit einer Vielzahl von Scharnieren (6) ausgestattet ist, deren Scharnierachsen mit der Ausrichtung der Halter (7) einen von Null verschiedenen spitzen Winkel einschließen.

2. Magazinband nach Anspruch 1, **dadurch gekennzeichnet, dass** die Scharnierachsen senkrecht zu der Längsausdehnung des Magazinbandes (1) verlaufen

3. Magazinband nach Anspruch 1 oder 2, **dadurch gekennzeichnet, dass** das Magazinband (1) aus einem Kunststoff hergestellt ist und dass die Scharniere (5) von Bereichen des Kunststoffbandes gebildet sind, die zwischen Vorsprüngen (4) an der Rückseite des Magazinbandes (1) liegen.

4. Magazinband nach Anspruch 1, 2 oder 3, **dadurch gekennzeichnet, dass** das Magazinband (1) aus einem Kunststoff hergestellt ist und dass die Scharniere (6) von Dickeschwächungen im Magazinband (1) gebildet sind.

5. Magazinband nach einem der vorhergehenden Ansprüche, **dadurch gekennzeichnet, dass** die Führungsmittel aus einer Vielzahl von Vorsprüngen (4) bestehen, die an ihren oberen und/oder unteren Kanten, die parallel zu den Längskanten (2, 3) des Magazinbandes (1) verlaufen, einen Hinterschnitt (5) aufweisen.

6. Magazinband nach einem der vorhergehenden Ansprüche, **dadurch gekennzeichnet, dass** jeder Halter zwei C-förmige Klammern (8, 9) aufweist, die bezogen auf die Halterausrichtung übereinander angeordnet sind.

7. Magazinband nach Anspruch 1, **dadurch gekennzeichnet, dass** jede Klammer (8, 9) über einen Klammersteg (10) mit dem Magazinband (1) verbunden ist, der sich in Richtung der Halterausrichtung erstreckt.

8. Eine für ein Eintreibgerät vorgesehene Magazinführung mit einem gerade verlaufenden Schacht (11) zur Aufnahme eines Magazinbandes (1), nach einem der vorhergehenden Ansprüche, wobei die Magazinbandebene in der Schachtebene liegt, und mit einem Adapter (18) zum Befestigen eines Eintreibgeräts, der so ausgerichtet ist, dass die Schachtebene parallel zur Eintreibrichtung des Eintreibgeräts und die Längserstreckung des Schachtes schräg zur Eintreibrichtung des Eintreibgeräts verläuft, **dadurch gekennzeichnet, dass** sich am Ausgang des Schachtes (11) eine Umlenkeinheit (20) befindet, die so gestaltet ist, dass der am Ausgang des Schachtes austretende, geleerte Magazinbandabschnitt gekrümmt und dabei aus der Schachtebene seitlich herauslenkt wird, wobei die Krümmungsachse einen spitzen von Null verschiedenen Winkel mit der Eintreibrichtung einschließt.

9. Magazinführung nach Anspruch 8 **dadurch gekennzeichnet, dass** die Umlenkung mindestes 90° beträgt.

10. Magazinführung nach einem der Ansprüche 8 und 9 mit einer eine Klinke (21) aufweisende Vorschubeinrichtung für ein in der Magazinführung liegendes Magazinband (1), **dadurch gekennzeichnet, dass** die Klinke (21) mit dem Eintreibgerät derart gekoppelt ist, dass beim Eintreiben eines Befestigungsmittels die Klinke (21) entgegen der Vorschubrichtung und relativ zum Magazinband (19 zurückgezogen wird und beim Zurückziehen des Eintreibgeräts unter Mitnahme des Magazinbandes (1) in Vorschubrichtung bewegt wird.

## Claims

1. Magazine strip having a front side and a rear side, wherein retainers (7) for elongated fastening means are located on the front side, the retainers being aligned such that the fastening means accommodated in the retainers (7) are parallel to each other and parallel to the front side, but run at an angle to the longitudinal extension of the magazine strip (1), and wherein guiding means (4) are located on the rear side in order to guide the magazine strip (1) in a Magazine guide (11), **characterized in that** the magazine strip (1) is equipped with a plurality of hinges (6), the axes of said hinges including an acute angle that is other than zero with the alignment of the retainers (7).

2. Magazine strip according to Claim 1, **characterized in that** the hinge axes run perpendicular to the longitudinal extension of the magazine strip (1).

3. Magazine strip according to Claim 1 or 2, **characterized in that** the magazine strip (1) is made of plastic and that the hinges (6) are formed from regions of the strip of plastic which are located between projections (4) on the rear side of the magazine strip (1).

4. Magazine strip according to Claim 1, 2 or 3, **characterized in that** the magazine strip (1) is made of plastic and that the hinges (6) are formed by a thickness weakening in the magazine strip (1).

5. Magazine strip according to one of the preceding claims, **characterized in that** the guiding means consist of a plurality of projections (4) which have an undercut (5) on their upper and/or lower edges which run parallel to the longitudinal edges (2, 3) of the magazine strip (1).

6. Magazine strip according to one of the preceding claims, **characterized in that** each retainer has two C-shaped clips (8, 9) which are arranged one above the other relative to the alignment of the retainer.

7. Magazine strip according to Claim 1, **characterized in that** each clip (8, 9) is connected via a clip bar (10) to the magazine strip (1) which extends in the direction of the alignment of the retainer.

8. A magazine guide provided for a drive-in device having a straight chute (11) for accommodating a magazine strip (1), according to one of the preceding claims, wherein the plane of the magazine lies in the plane of the chute, and having an adapter (18) for fastening a drive-in device which is aligned such that the plane of the chute is parallel to the drive-in direction of the drive-in device and the longitudinal extension of the chute runs at an angle to the drive-in direction of the drive-in device, **characterized in that** a deflector unit (20) is located at the outlet of the chute (11), the deflector unit being designed such that the emptied magazine strip section exiting at the outlet of the chute is bent and is thereby directed laterally out of the plane of the chute, wherein the axis of curvature includes an acute angle that is other than zero with the drive-in direction.

9. Magazine guide according to Claim 8, **characterized in that** the deflection is at least 90°.

10. Magazine guide according to one of Claims 8 and 9 with a feed device for a magazine strip (1) located in the magazine guide having a latch (21), **characterized in that** the latch (21) is coupled with the drive-in device such that when a fastening means is being driven in, the latch (21) is retracted against the feed direction and relative to the magazine strip (1) and is moved in the feed direction on retracting the drive-in device with entrainment of the magazine strip (1).

## Revendications

1. Bande de chargeur avec une face avant et une face arrière, dans laquelle des logements (7) se trouvent sur la face avant pour des moyens de fixation allongés, lesquels sont orientés d'une façon telle, que les moyens de fixation réceptionnés dans les logements (7) s'étendent parallèlement entre eux et parallèlement à la face avant, mais en biais par rapport à l'étendue longitudinale de la bande de chargeur (1), et dans laquelle des moyens de guidage (4) se trouvent sur la face arrière pour guider la bande de chargeur (1) dans un guidage de chargeur (11),
**caractérisée en ce que** la bande de chargeur (1) est équipée d'une pluralité de charnières (6) dont les axes de charnière forment un angle aigu différent de zéro avec l'orientation des logements (7).

2. Bande de chargeur selon la revendication 1, **caractérisée en ce que** les axes de charnière s'étendent perpendiculairement à l'étendue longitudinale de la bande de chargeur (1).

3. Bande de chargeur selon la revendication 1 ou 2, **caractérisée en ce que** la bande de chargeur (1) est fabriquée à partir d'un plastique et **en ce que** les charnières (6) sont formées par des zones de la bande de plastique, lesquelles se situent entre des saillies (4) sur la face arrière de la bande de chargeur (1).

4. Bande de chargeur selon la revendication 1, 2 ou 3, **caractérisée en ce que** la bande de chargeur (1) est fabriquée à partir d'un plastique et **en ce que** les charnières (6) sont formées par des atténuations d'épaisseur dans à bande de chargeur (1).

5. Bande de chargeur selon l'une des revendications précédentes, **caractérisée en ce que** les moyens de guidage se composent d'une pluralité de saillies (4), lesquelles présentent une contre-dépouille (5) au niveau de leurs bords supérieurs et/ou inférieurs qui s'étendent parallèlement aux bords longitudinaux (2, 3) de la bande de chargeur (1).

6. Bande de chargeur selon l'une des revendications précédentes, **caractérisée en ce que** chaque logement présente deux pinces en forme de C (8, 9), lesquelles sont disposées en superposition compte tenu de l'orientation de logement.

7. Bande de chargeur selon la revendication 1, **caractérisée en ce que** chaque pince (8, 9) est reliée via une bride de pince (10) à la bande de chargeur(1), laquelle bride s'étend en direction de la direction de logement.

8. Guidage de chargeur prévu pour un outil d'enfoncement avec un puits (11) s'étendant en ligne droite pour la réception d'une bande de chargeur (1) selon l'une des revendications précédentes, dans lequel le plan de bande de chargeur se situe dans le plan du puits, et avec un adaptateur (18) pour la fixation d'un outil d'enfoncement, lequel est orienté d'une façon telle, que le plan du puits s'étend parallèlement à la direction d'enfoncement de l'outil d'enfoncement et que l'étendue longitudinale du puits s'étend en biais par rapport à la direction d'enfoncement de l'outil d'enfoncement,
**caractérisé en ce qu'**une unité de déviation (20) se trouve à la sortie du puits (11), laquelle est réalisée d'une façon telle, que la partie de bande de chargeur vidée sortant à la sortie du puits est courbée en étant ce faisant guidée latéralement hors du plan du puits, dans lequel l'axe de courbure forme un angle aigu différent de zéro avec la direction d'enfoncement.

9. Guidage de chargeur selon la revendication 8, **caractérisé en ce que** la déviation est au moins de 90°.

10. Guidage de chargeur selon l'une des revendications 8 et 9 avec un dispositif d'avance présentant un cliquet (21) pour une bande de chargeur (1) située dans le guidage de chargeur,
**caractérisé en ce que** le cliquet (21) est couplé avec l'outil d'enfoncement d'une façon telle, que lors de l'enfoncement d'un moyen de fixation, le cliquet (21) est rétracté à l'encontre de la direction d'avance et par rapport à la bande de chargeur (1) et est déplacé en direction d'avance lors de la rétractation de l'outil d'enfoncement en emmenant la bande de chargeur (1).
